# EUROPÄISCHE PATENTSCHRIFT

(11) **EP 3 320 362 B1**
(45) Veröffentlichungstag und Bekanntmachung des Hinweises auf die Patenterteilung: **23.09.2020**
(21) Anmeldenummer: 16727724.3
(22) Anmeldetag: 09.06.2016
(51) Int. Cl.: G01S 7/521, G01S 15/931, G10K 11/00, G10K 9/22, B60R 19/48

(54) **ULTRASCHALLSENSORVORRICHTUNG ZUR ANORDNUNG AN EINEM VERKLEIDUNGSBAUTEIL EINES FAHRZEUGS**
ULTRASONIC SENSOR DEVICE FOR ARRANGEMENT ON A FAIRING COMPONENT OF A VEHICLE
DISPOSITIF DE DÉTECTION À ULTRASONS DESTINÉ À ÊTRE AGENCÉ AU NIVEAU D'UN ÉLÉMENT D'HABILLAGE D'UN VÉHICULE

(30) Priorität: 06.07.2015 DE 102015212599
(43) Veröffentlichungstag der Anmeldung: 16.05.2018
(73) Patentinhaber: Robert Bosch GmbH, 70442 Stuttgart (DE)
(72) Erfinder: WEIDENFELDER, David, 71229 Leonberg (DE); REISS, Rafael, 70569 Stuttgart (DE); SCHUMANN, Michael, 70597 Stuttgart (DE)
(86) Internationale Anmeldenummer: PCT/EP2016/063092
(87) Internationale Veröffentlichungsnummer: WO 2017/005448

(56) Entgegenhaltungen:
- DE-A1-102006 007 710
- DE-A1-102010 044 996
- DE-A1-102010 045 971
- US-A1- 2015 008 796

## Beschreibung

### Stand der Technik

Die Erfindung betrifft eine Ultraschallsensorvorrichtung zur Anordnung an einem Verkleidungsbauteil eines Fahrzeugs umfassend einen Ultraschallsensor und eine Halterung mit einem Träger und einer Kappe. Weitere Aspekte der Erfindung betreffen eine Sensoranordnung umfassend eine solche Ultraschallsensorvorrichtung und ein Verkleidungsbauteil für ein Fahrzeug, sowie ein Verfahren zur Herstellung.

In modernen Fahrzeugen wird üblicherweise eine Vielzahl von Sensoren eingesetzt, mit denen die Umgebung des Fahrzeugs erfasst wird. Geeignete Sensoren zur Erfassung der Umgebung des Fahrzeugs sind insbesondere Ultraschallsensoren. Ultraschallsensoren senden ein Ultraschallsignal aus und detektieren von Objekten in der Umgebung des Fahrzeugs reflektierte Ultraschallechos. Aus der Zeit, die von der Aussendung des Ultraschallsignals bis zum Empfang eines Ultraschallechos vergeht, sowie der bekannten Schallgeschwindigkeit, kann auf die Entfernung des Objekts geschlossen werden.

Übliche Positionen, an denen Ultraschallsensoren angeordnet werden, sind der vordere sowie der hintere Stoßfänger eines Kraftfahrzeugs. Dabei werden in der Regel mehrere Ultraschallsensoren in einem Stoßfänger angeordnet, wobei die Ultraschallsensoren in der Regel in Ausnehmungen der Stoßfänger angeordnet werden, so dass eine Membran der Ultraschallsensoren nicht durch den Stoßfänger verdeckt wird und Ultraschallsignale störungsfrei gesendet und die Ultraschallechos wieder störungsfrei empfangen werden können.

Im Stand der Technik sind auch Ausführungsformen von Ultraschallsensoren bekannt, die verdeckt an einem Verkleidungsbauteil eines Fahrzeugs, wie beispielsweise einem Stoßfänger, angeordnet werden.

Aus DE 10 2012 106 700 A1 ist eine Ultraschallsensoranordnung für ein Kraftfahrzeug bekannt, bei der ein Ultraschallsensor auf der Rückseite eines Verkleidungsteils eines Fahrzeugs angeordnet ist. Die Anordnung umfasst ein um die Membran des Ultraschallsensors herum angeordnetes Versteifungselement mit einer Durchgangsöffnung, durch welche sich die Membran hindurch erstreckt. Zwischen der Rückseite des Verkleidungsteils und dem Versteifungselement ist ein plattenförmiges Zwischenelement angeordnet, welches mit dem Verkleidungsteil sowie mit dem Versteifungselement verklebt ist. Mit Hilfe des Versteifungselements wird der durch den Ultraschallsensor zum Schwingen angeregte Bereich des Stoßdämpfers begrenzt, so dass keine unerwünschten Schwingungen auf den restlichen Bereich des Verkleidungsteils übertragen werden.

Aus DE 10 2010 049 818 A1 ist eine Anordnung mit einem Außenverkleidungselement für ein Fahrzeug und einem Sensor bekannt, bei dem der Sensor hinter einer Wandung verdeckt positioniert ist. Der Sensor wird über eine mit dem Außenverkleidungselement verbundene Halterung an die Wandung mit einer Vorspannkraft angepresst, so dass er kraftschlüssig mit der Wandung in Position gehalten ist. Zusätzlich ist vorgesehen, dass der Sensor mit der Wandung über eine Ankopplungsschicht verbunden ist, wobei die Ankopplungsschicht durch eine Klebebeschichtung eines Klebeelements gebildet werden kann, so dass zwischen dem Sensor und der Wandung eine reversible, stoffschlüssige Verbindung ausgebildet ist. Die Haltevorrichtung ist mit dem Außenverkleidungselement stoffschlüssig verbunden, beispielsweise durch eine stoffschlüssige Verbindung mit Hilfe eines Klebeelements, oder sie ist durch Spritzgießen mit dem Außenverkleidungselement verbunden.

Aus dem Dokument DE 10 2006 007 710 A1 ist eine Sensorhalterung, insbesondere zur Halterung von Abstandssensoren an Fahrzeugteilen, mit einer Aufnahme für einen Sensor bekannt, wobei die Aufnahme eine axial vordere Seite, in deren Bereich sich bei einem in die Halterung eingesetzten Sensor die aktive Fläche des Sensors befindet, und eine der vorderen Seite abgewandte hintere Seite aufweist. Die Erfindung kennzeichnet sich dadurch, dass die Halterung eine Abdeckung umfasst, mit der die hintere Seite der Aufnahme bei Vorhandensein eines Sensors in der Halterung zur Dämpfung von Sensorsignalen, die in die hintere Richtung abgestrahlt werden, und/oder zur Dämpfung von aus der hinteren Richtung kommenden Reflexionssignalen abgedeckt oder abdeckbar ist.

Das Dokument DE 10 2010 044 996 A1 beschreibt eine Sensoranordnung für ein Fahrzeug, welches als ein Außenverkleidungsteil beispielsweise einen Stoßfänger aufweist. Dieses Außenverkleidungsteil weist eine Aussparung auf, in welcher ein Ultraschallsensor angeordnet ist, der mittels eines Endstücks mechanische Schwingungen erzeugt. Zusätzlich ist ein Versteifungsteil vorgesehen, mittels welchem die vom Endstück des Sensors erzeugte und auf das Außenverkleidungsteil übertragene Schwingungen der Abdeckung verringert werden.

Das Dokument DE 10 2010 045 971 A1 beschreibt eine Anordnung mit einem Stoßfänger für ein Fahrzeug und mit einem Ultraschallsensor, der an einem Stoßfänger angeordnet ist. Der Ultraschallsensor weist hierbei einen Entkopplungsring auf, der sich bereichsweise in eine Aussparung des Stoßfängers erstreckt. Zusätzlich ist ein Abstandselement vorgesehen, welches in radialer Richtung weiter nach außen angeordnet ist als der Entkopplungsring und zur Abstandshaltung des Ultraschallsensors in axialer Richtung relativ zum Stoßfänger dient.

Im Stand der Technik ist keine Lösung bekannt, bei der die Halterung für den Ultraschallsensor ausreichende Steifigkeit besitzt, bei der die Verbindung zwischen der Halterung und dem Verkleidungsbauteil über die gesamte Lebenszeit garantiert werden kann, die kritische Bereiche zuverlässig abdichtet und ein leichtes Auswechseln des Ultraschallsensors ermöglicht.

### Offenbarung der Erfindung

Es wird eine Ultraschallsensorvorrichtung zur Anordnung an einem Verkleidungsbauteil eines Fahrzeugs vorgeschlagen umfassend einen Ultraschallsensor und eine Halterung mit einem Träger und einer Kappe. Dabei umfasst der Ultraschallsensor ein schwingendes Element. Der Träger der Halterung weist einen Verbindungsabschnitt auf, mittels dem der Träger mit dem Verkleidungsbauteil stoffschlüssig fügbar ist. Des Weiteren weist der Träger einen Rahmenabschnitt auf, der einen Aufnahmebereich für den Ultraschallsensor ausbildet. In dem Verbindungsabschnitt ist eine Öffnung vorgesehen, durch die sich das schwingende Element des Ultraschallsensors erstreckt.

Die Kappe ist mittels einer Rastverbindung lösbar an dem Träger befestigt, wobei die Kappe den Aufnahmebereich auf der dem Verbindungsabschnitt abgewandten Seite begrenzt.

Ferner ist vorgesehen, dass der Träger als Hybridbauteil mit einer mit Kunststoff umspritzten Metalleinlage ausgeführt ist, wobei sich die Metalleinlage sowohl über den Verbindungsabschnitt als auch über den Rahmenabschnitt erstreckt und wobei sich ein erster Abschnitt der Metalleinlage parallel zu einer Fläche erstreckt, mittels der die Halterung mit dem Verkleidungsbauteil fügbar ist und ein zweiter Abschnitt der Metalleinlage sich senkrecht zum ersten Abschnitt erstreckt. Auch die Kunststoffumspritzung erstrecht sich sowohl über den Verbindungsabschnitt als auch über den Rahmenabschnitt. Die Metalleinlage ist bevorzugt vollständig oder nahezu vollständig mit Kunststoff umspritzt, wobei gegebenenfalls durch das Halten der Metalleinlage in der zum Umspritzen verwendeten Form kleine Bereiche der Metalleinlage auch nach der Umspritzung sichtbar sein können. Insbesondere die Fläche des Hybridbauteils, die mit dem Verkleidungsbauteil fügbar ist, ist bevorzugt vollständig mit Kunststoff umspritzt. Bei dem Verkleidungsbauteil des Fahrzeugs handelt es sich beispielsweise um einen Stoßfänger, eine Stoßleiste, ein Spiegelgehäuse, einen Kühlergrill, eine Tür, einen (Seiten-)Schweller, einen Unterboden, einen Kotflügel oder ein Seitenteil.

Erfindungsgemäß ist die Ultraschallsensorvorrichtung derart ausgestaltet, dass im Aufnahmebereich ein radialer Freiraum zwischen dem Ultraschallsensor und dem Rahmenabschnitt des Trägers ausgebildet ist und die Kappe zumindest eine Zentrierrippe aufweist, die zumindest teilweise in den Freiraum eingreift. Die Zentrierrippe ist dabei derart angeordnet und ausgestaltet, dass diese den Ultraschallsensor innerhalb des Aufnahmebereichs zentriert. Beispielsweise werden drei Zentrierrippen mit jeweils einem Winkel von 120° zueinander angeordnet, um den Ultraschallsensor zu zentrieren.

Der Ultraschallsensor weist als schwingendes Element bevorzugt eine Membran auf. Die Membran ist beispielweise topfförmig ausgestaltet, und erstreckt sich durch die Öffnung im Verbindungsabschnitt hindurch.

Bevorzugt ist ein Dichtelement zwischen dem schwingenden Element und dem Träger im Bereich der Öffnung im Verbindungsabschnitt angeordnet. Das Dichtelement ist bevorzugt aus einem Elastomer gefertigt, beispielsweise ist als Material Silikon geeignet. Das Dichtelement ist derart ausgestaltet, dass es den Bereich zwischen Ultraschallsensor, Verkleidungsbauteil und Halterung abdichtet, so dass keine Feuchtigkeit an das Kopplungselement zwischen dem Ultraschallsensor und dem Verkleidungsbauteil gelangt. Dabei ist es bevorzugt so ausgestaltet, dass es nicht zu fest sitzt und dadurch Montage- und Demontagevorgänge nicht erschwert. Das Dichtelement kann so ausgestaltet sein, dass es teilweise in den radialen Freiraum zwischen dem Ultraschallsensor und dem Rahmenabschnitt des Trägers eingreift.

Die Kappe ist bevorzugt eingerichtet, den Ultraschallsensor in Richtung des Kopplungselements vorzuspannen. Um die Vorspannkraft auf den Ultraschallsensor auszuüben, weist die Kappe bevorzugt eine Wölbung auf. Die Wölbung ist dabei derart an der Kappe angeordnet, dass die Wölbung als ein elastischer Bereich der Kappe dient und die Kappe mit dem Ultraschallsensor mittels der Wölbung in Verbindung steht. Alternativ kann die Kappe auch ein mechanisch nachgiebiges Element aufweisen, welches den Ultraschallsensor in Richtung des Kopplungselements vorspannt. Hierbei können sowohl Elastomere sowie auch metallische Körper, wie z.B. Federn verwendet werden. Diese mechanisch nachgiebigen Element können separat eingelegt bzw. mit der Kappe verbunden werden oder bereit bei der Fertigung der Kappe mit dieser verbunden werden, beispielsweise könne diese in die Kappe eingespritzt werden. Dies erleichtert die Montage des Ultraschallsensors.

Bevorzugt weist der Verbindungsabschnitt des Trägers der Ultraschallsensorvorrichtung auf der Seite, die mit dem Verkleidungsbauteil fügbar ist, zumindest eine Schweißrippe auf. Bevorzugt ist die Schweißrippe derart ausgestaltet, dass diese umlaufend um die Öffnung in dem Verbindungsabschnitt angeordnet ist. Dies garantiert neben der nötigen Haltekraft auch die Dichtheit, so dass an dieser Fügestelle keine Feuchtigkeit eindringen kann. Bevorzugt werden zur Reduktion von Schwingungen im Verkleidungsbauteil weitere Noppen und Rippen hinzugefügt, die für die Bereitstellung der Haltekraft nicht relevant sind, allerdings das Verkleidungsbauteil in seinen Schwingungen durch die Anbindung zur steifen Halterung beruhigt. Dadurch kann gewährleistet werden, dass die Schwingung des Verkleidungsbauteils über den gesamten Temperaturbereich kontrollierbar bleibt. Die zusätzlichen Rippen und Noppen könne des Weiteren eingesetzt werden, eine abzeichnungsfreie Anbindung der Halterung an dem Verkleidungsbauteil zu ermöglichen. Die Halterung ist durch ihre Metalleinlage sehr steif, so dass die Halterung dem Verkleidungsbauteil die Form aufzwingt. Erhöht sich die Temperatur der Umgebung, so dehnen sich die Halterung und das Verkleidungsbauteil unterschiedlich stark aus. Dies führt zu Verspannungen, die wiederum auf der Außenhaut des Verkleidungsbauteils zu optischen Abzeichnungen der Halterung führen. Durch die Rippen und Noppen wird die Anbindung der Halterung an das Verkleidungsbauteil so ausgestaltet, dass die Anbindung lediglich in orthogonaler Richtung zum Verkleidungsbauteil steif ist, jedoch nicht in paralleler Richtung. Gegenüber einem flächigen Fügen der Halterung mit dem Verkleidungsbauteil werden so Abzeichnungen erheblich reduziert.

Zur Übertragung der Schwingungen des Ultraschallsensors auf ein Verkleidungsbauteil, mit dem der Träger gefügt werden kann, wird bevorzugt ein Kopplungselement verwendet, welches an der nach außen weisenden Seite des schwingenden Elements angeordnet ist. Bevorzugt ist das Kopplungselement als eine Klebstoffschicht oder als ein Klebeband ausgeführt, wobei das Kopplungselement eingerichtet ist, das schwingende Element des Ultraschallsensors mit einem Bereich des Verkleidungsbauteils zu verkleben. Bevorzugt erfolgt das Verkleben vollflächig. Alternativ ist es bevorzugt, das Kopplungselement als Elastomereinlage auszuführen. Weiter ist es alternativ möglich, das Kopplungselement als Anspritzung an den Ultraschallsensor auszuführen. Auf diese Weise ist das Kopplungselement immer mit dem Ultraschallsensor verbunden und verringert die Wahrscheinlichkeit einer Ablösung.

Bevorzugt weist das Verkleidungselement einen ausgedünnten Bereich auf oder ist zumindest im Bereich der Anbindung des Kopplungselements dünn gestaltet, wobei im Fall von Polypropylen eine Materialstärke von weniger als 3 mm als dünn angesehen wird. Der ausgedünnte Bereich des Verkleidungsbauteils ist beispielsweise in Form einer Vertiefung auf der Rückseite des Verkleidungsbauteils ausgestaltet. Durch das Ausdünnen ist die Materialstärke des Verkleidungsbauteils in dem Bereich, an dem der Ultraschallsensor angeordnet wird, reduziert, so dass Schwingungen des Ultraschallsensors leichter durch das Verkleidungsbauteil hindurch abgestrahlt und wieder empfangen werden können. Über die Form der Ausdünnung können die Schwingungen des Verkleidungsbauteils und somit die Abstrahlung des Ultraschalls beeinflusst werden, beispielsweise um eine Richtcharakteristik zu erzeugen. Beispielweise wird die Ausdünnung in Form eines Kreises oder einer Ellipse gestaltet und entsprechend an die benötigte Abstrahlcharakteristik angepasst.

Bevorzugt ist das als Klebstoffschicht oder als Klebeband ausgeführte Kopplungselement vor dem Fügen mit dem Verkleidungsbauteil mit einer Schutzschicht geschützt, die erst unmittelbar vor dem Fügen entfernt wird. Die Schutzschicht ist beispielsweise als Folie ausgeführt.

Zur lösbaren Befestigung der Kappe an dem Träger sind bevorzugt Rastnasen an einer Außenseite des Rahmenabschnitts des Trägers vorgesehen, die in korrespondierende Öffnungen an der Kappe eingreifen. Dazu werden beispielsweise drei Rastnasen beziehungsweise Öffnungen über den Umfang des Rahmenabschnitts beziehungsweise der Kappe verteilt angeordnet.

Der Träger ist als Hybridbauteil ausgeführt, bestehend aus einer Metalleinlage, die mit einem Kunststoff umspritzt ist. Die Umspritzung erstreckt sich dabei sowohl über den Verbindungsabschnitt als auch über den Rahmenabschnitt. Die Metalleinlage sorgt hierbei für eine Versteifung des Trägers. Der erste Abschnitt der Metalleinlage, der parallel zu der mit dem Verkleidungsbauteil zu fügenden Fläche liegt, umschließt nach dem Fügen der Halterung mit dem Verkleidungsbauteil den Bereich des Verkleidungsbauteils, der mit dem schwingenden Element des Ultraschallsensors in Verbindung steht. Aufgrund der Steifheit des Trägers werden Schwingungen des Verkleidungsbauteils außerhalb des durch die Halterung bzw. des Trägers begrenzten Bereichs, die durch den Ultraschallsensor angeregt werden reduziert. Neben der Versteifung des Halters durch die Metalleinlage ist die erhöhte Masse der Metalleinlage vorteilhaft, um die Schwingungen zu reduzieren, da mit steigender Masse ebenso wie mit steigender Steifigkeit auch die mechanische Impedanz, also der Widerstand gegen Schwingungen, steigt. Somit sorgen beide Eigenschaften - Masse und Steifigkeit - für eine Reduzierung der Schwingungen.

Bevorzugt kann die Metalleinalge so ausgestaltet werden, dass diese Versteifungsrippen aufweist. Auf diese Weise wird eine zusätzliche Steifigkeit erreicht, mit der Schwingungen reduziert werden. Die Versteifungsrippen können dabei in Form einer Verstrebung ausgestaltet sein, durch die die beiden Abschnitte der Metalleinlage miteinander verbunden werden.

Die Metalleinlage ist bevorzugt aus Aluminium, Messing oder Edelstahl gefertigt.

Der Kunststoff, mit dem die Metalleinlage umspritzt ist, ist bevorzugt aus einem Material gefertigt, das dem Material des Verkleidungsbauteils entspricht. Dadurch können verschiedene Ultraschallschweißverfahren genutzt werden. Ein übliches Material für Verkleidungsbauteile ist Polypropylen, gegebenenfalls mit verschiedenen Additiven. Darüber hinaus kann der Kunststoff beispielsweise durch das Zugeben von Glas- oder Karbonfasern oder Additiven wie Talkum modifiziert werden. Alternativ kann auch ein vom Material des Verkleidungsbauteils abweichender Kunststoff ausgewählt werden, bevorzugt ist der gewählte Kunststoff mit dem Material des Verkleidungsbauteils schweißbar.

Da viele Verkleidungsbauteile von Fahrzeugen, wie beispielsweise die Stoßfänger, aus Polypropylen (PP) gefertigt sind, ist Polypropylen beziehungsweise glasfaserverstärktes Polypropylen als Kunststoff besonders geeignet, da sich dann der als Hybridbauteil ausgeführte Träger besonders gut durch ein Schweißverfahren stoffschlüssig mit dem Verkleidungsbauteil fügen lässt. Als Schweißverfahren ist beispielsweise Torsionsultraschallschweißen geeignet, welches insbesondere in Kombination mit der Anordnung zumindest einer Schweißrippe ausgeführt wird. Des Weiteren eignen sich zur stoffschlüssigen Verbindung auch andere Verfahren, wie Aufschmelzen.

Als Material für die Kappe ist beispielsweise Kunststoff geeignet. Neben dem bereits für das Umspritzen der Metalleinlage des Trägers ausgewählten Kunststoff ist insbesondere glasfaserverstärktes Polypropylen geeignet. Glasfaserverstärktes Polypropylen wirkt dämpfend und weist gleichzeitig eine hohe mechanische Festigkeit auf. Alternativ kann die Kappe auch als Hybridbauteil hergestellt werden, beispielsweise mit einer eingespritzten Feder oder einem eingespritzten Elastomer zur Erzeugung der Vorspannkraft.

Des Weiteren wird eine Sensoranordnung vorgeschlagen, wobei die Sensoranordnung ein Verkleidungsbauteil für ein Fahrzeug sowie mindestens eine der beschriebenen Ultraschallsensorvorrichtungen umfasst. Ferner ist vorgesehen, dass die Ultraschallsensorvorrichtung mittels des Verbindungsabschnitts des Trägers stoffschlüssig mit der Rückseite des Verkleidungsbauteils gefügt ist, und dass das schwingende Element des Ultraschallsensors mittels des Kopplungselements mit dem Verkleidungsbauteil verbunden ist. Das Verbinden erfolgt beispielsweise stoffschlüssig mittels Verkleben, wobei das Verkleben bevorzugt vollflächig erfolgt.

An dem Verkleidungsbauteil ist bevorzugt ein ausgedünnter Bereich in Form einer Vertiefung an einer Rückseite des Verkleidungsbauteils angeordnet, wobei das schwingende Element bevorzugt mit dem ausgedünnten Bereich des Verkleidungsbauteils verbunden wird.

Zum stoffschlüssigen Fügen des Trägers mit der Rückseite des Verkleidungsbauteils kommt bevorzugt ein Schweißverfahren zum Einsatz, wobei insbesondere Torsionsultraschallschweißen geeignet ist. Weitere stoffschlüssige Fügeverfahren sind beispielsweise das Kleben oder das Aufschmelzen. Wird als Fügeverfahren das Schweißen gewählt, so erfolgt dies insbesondere in Kombination mit an dem Verbindungsabschnitt angeordneten Schweißrippen.

Das Kopplungselement, welches bevorzugt in Form einer Klebeschicht und besonders bevorzugt in Form eines Klebebands ausgeführt ist, wird bevorzugt gegenüber der Umgebung abgedichtet, so dass keine Feuchtigkeit zum Kopplungselement vordringen kann. Daher ist es bevorzugt, dass das Kopplungselement mittels des Verkleidungsbauteils, dem schwingenden Element und des Dichtelements gegenüber der Umgebung abgedichtet ist. Das Dichtelement ist bevorzugt rotationssymmetrisch ausgeführt und in der Öffnung im Verbindungsabschnitt des Trägers eingesetzt.

Ein Verfahren zur Herstellung einer solchen Sensoranordnung kann z.B. wie folgt erfolgen: In einem ersten Schritt des Verfahrens werden eine Halterung, ein Verkleidungsbauteil und ein Ultraschallsensor bereitgestellt. Die Halterung umfasst eine Kappe und einen Träger, wobei der Träger einen Verbindungsabschnitt und einen Rahmenabschnitt aufweist und wobei der Träger als Hybridbauteil mit vollständig mit Kunststoff umspritzter Metalleinlage ausgeführt ist. Die Metalleinlage erstreckt sich sowohl über den Verbindungsabschnitt als auch über den Rahmenabschnitt, wobei sich ein erster Abschnitt der Metalleinlage parallel zu einer Fläche erstreckt, über die der Träger mit dem Verkleidungsbauteil fügbar ist und ein zweiter Abschnitt der Metalleinlage sich senkrecht zum ersten Abschnitt erstreckt.

In einem zweiten Schritt des Verfahrens folgt ein stoffschlüssiges Fügen des Verbindungsabschnitts mit einer Rückseite des Verkleidungsbauteils. Bevorzugt erfolgt das stoffschlüssige Fügen durch ein Schweißverfahren, wobei hierzu bevorzugt Schweißrippen und/oder Noppen am Verbindungsabschnitt angeordnet sind.

In einem dritten Schritt des Verfahrens wird der Ultraschallsensor in die Kappe eingesetzt, wobei die Kappe eine Zentrierrippe aufweist, mit der der Ultraschallsensor in der Kappe positioniert wird.

In einem vierten Schritt wird ein Kopplungselement bereitgestellt, welches mit der nach außen zeigenden Seite eines schwingenden Elements des Ultraschallsensors verbunden ist. Dies kann beispielsweise durch Auftragen einer Klebstoffschicht erfolgen. Des Weiteren ist es denkbar, dass auf dem schwingenden Element des Ultraschallsensors bereits ein Klebeband angeordnet ist, wobei dieses durch Abziehen einer Schutzfolie für die Montage vorbereitet und somit bereitgestellt wird.

In einem fünften Schritt des Verfahrens wird die Kappe mit dem Ultraschallsensor in einen im Träger ausgebildeten Aufnahmebereich eingesetzt, wobei eine Rastverbindung zwischen der Kappe und dem Träger hergestellt wird, und wobei das schwingende Element des Ultraschallsensors sich durch eine Öffnung im Verbindungsabschnitt hindurch erstreckt und das Kopplungselement bevorzugt an einen ausgedünnten Bereich des Verkleidungsbauteils angrenzt und eine stoffschlüssige Verbindung mit dem Verkleidungsbauteil herstellt. Das Kopplungselement wird durch ein in der Öffnung angeordnetes Dichtelement, das schwingende Element und das Verkleidungsbauteil gegenüber der Umgebung abgedichtet.

Sollte es später erforderlich sein, den Ultraschallsensor der Sensoranordnung auszuwechseln, so kann dies erfolgen, indem in einem ersten Schritt die Kappe entfernt wird, wodurch um den Ultraschallsensor herum ein radialer Freiraum frei zugänglich ist. Mit Hilfe des in den radialen Richtungen vorliegenden Freiraums lässt sich der Ultraschallsensor heraushebeln. Das Kopplungselement bzw. die Klebstoffschicht oder das Klebeband ist somit bevorzugt derart ausgestaltet, dass die Verbindung zwischen dem schwingenden Element und dem Verkleidungsbauteil wieder gelöst werden kann, Anschließend wird der nun zugängliche ausgedünnte Bereich des Verkleidungsbauteils von eventuellen Resten des Kopplungselements beziehungsweise des Klebstoffs oder des Klebebands befreit. Die Halterung ist nun bereit zum Einsetzen eines neuen Ultraschallsensors.

Ein weiterer Aspekt der Erfindung betrifft ein Fahrzeug, welches mindestens eine der beschriebenen Sensoranordnungen umfasst.

### Vorteile der Erfindung

Mit der vorgeschlagenen Ultraschallsensorvorrichtung beziehungsweise der vorgeschlagenen Sensoranordnung kann ein Ultraschallsensor so mit einem Verkleidungsbauteil eines Fahrzeugs verbunden werden, dass dieser von der Außenseite des Verkleidungsbauteils nicht sichtbar ist. Des Weiteren ist diese Verbindung in den bevorzugten Ausführungsformen, bei denen die Halterung mit dem Verkleidungsbauteil verschweißt wird, besonders zuverlässig, so dass die Funktionsweise der Sensoranordnung für die gesamte Lebenszeit eines Fahrzeugs garantiert werden kann. Zusätzlich wird vorteilhaft durch das Vorsehen von Rippen und/oder Noppen eine in paralleler Richtung zum Verkleidungsbauteil nachgiebige Befestigungsmethode gewählt. Hierdurch werden im Vergleich zu einem vollflächigen Verkleben sichtbare Abzeichnungen der Halterung auf der Außenseite des Verkleidungsbauteils erheblich reduziert.

Die besonders gute Verbindung zwischen der Ultraschallsensorvorrichtung und dem Verkleidungsbauteil wird durch den Träger der Halterung gewährleistet, der vorteilhafterweise als Hybridbauteil ausgeführt ist. Die Metalleinlage des Hybridbauteils verleiht der Halterung die nötige Steifigkeit beziehungsweise Masse, um auftretende Schwingungen des Verkleidungsbauteils auf den Bereich zu begrenzen, der an die Membran des Ultraschallsensors grenzt. Gleichzeitig erlaubt der Kunststoff, mit dem die Metalleinlage umspritzt ist, eine besonders haltbare Verbindung mittels Schweißen mit Verkleidungsbauteilen, die üblicherweise aus dem gleichen Kunststoff gefertigt sind.

Ein weiterer Vorteil des verwendeten Ultraschallschweißens besteht in der kompakten Bauweise der Halterung. Durch die hohen Haltekräfte der Schweißrippe kann der Träger der Halterung mit einem kleinen Durchmesser realisiert werden. Bei Klebeverfahren hingegen wird die Haltekraft maßgeblich über eine wesentlich größere Fläche der Klebung gewährleistet. Zusätzlich muss dieser Fläche bei einer Klebung besonders gründlich gereinigt werden, was bei der Schweißung nicht der Fall ist. Somit kann sich die Reinigung während der Produktion auf die Fläche des Verkleidungsbauteils beschränken und etwaige Lackspritzer müssen nicht entfernt werden, da diese die Schweißung nicht negativ beeinflussen.

Ein weiterer Vorteil ist darin zu sehen, dass die zweiteilige Ausführung des Halters in Form eines Trägers und einer Kappe ein leichtes Auswechseln des Ultraschallsensors ermöglicht. Nach Abnahme der Kappe, die über eine einfache Rastverbindung mit dem Träger in Verbindung steht, lässt sich aufgrund des vorgesehenen Freiraums der Ultraschallsensor leicht von dem Klebeband, mit dem das schwingende Element an das Verkleidungsbauteil gekoppelt wird, abhebeln und damit ablösen.

In zusammengebautem Zustand werden kritische Teile, wie beispielsweise das bevorzugt als Klebeband ausgeführte Kopplungselement gegenüber der Umwelt abgedichtet, so dass keine Feuchtigkeit eindringen kann und die Haftwirkung des Klebebands beeinträchtigen kann. Somit bleibt die Membran des Ultraschallsensors zuverlässig an das Verkleidungsbauteil angekoppelt.

Bevorzugt ist zudem der Ultraschallsensor in einem Bereich des Verkleidungsbauteils angeordnet, an dem dieses eine Vertiefung beziehungsweise einen ausgedünnten Bereich aufweist. Dadurch kann der Ultraschallsensor besonders effizient Ultraschall durch das Verkleidungsbauteil hindurch aussenden und Ultraschallechos durch das Verkleidungsbauteil hindurch wieder empfangen. Bei dünnen Verkleidungsbauteilen kann auf diese Vertiefung verzichtet werden.

Durch die verdeckte Anordnung kann das Verkleidungsbauteil ästhetisch ansprechend gestaltet werden. Die Gestaltungsfreiheit dieser

Verkleidungsbauteile wie beispielsweise Stoßfänger, Stoßleisten, Spiegelgehäuse, Kühlergrill, Türen, (Seiten-)Schweller, Unterböden, Kotflügel oder Seitenteile wird dadurch vorteilhaft vergrößert.

### Kurze Beschreibung der Figuren

Ein Ausführungsbeispiel der Erfindung ist in der nachfolgenden Zeichnung dargestellt und in der nachfolgenden Beschreibung näher erläutert. Die einzige Figur zeigt eine Sensoranordnung, bei der ein Ultraschallsensor mit einer Halterung verdeckt an einem Verkleidungsbauteil eines Fahrzeugs angeordnet ist.

In der nachfolgenden Beschreibung wird der Gegenstand der Erfindung schematisch dargestellt.

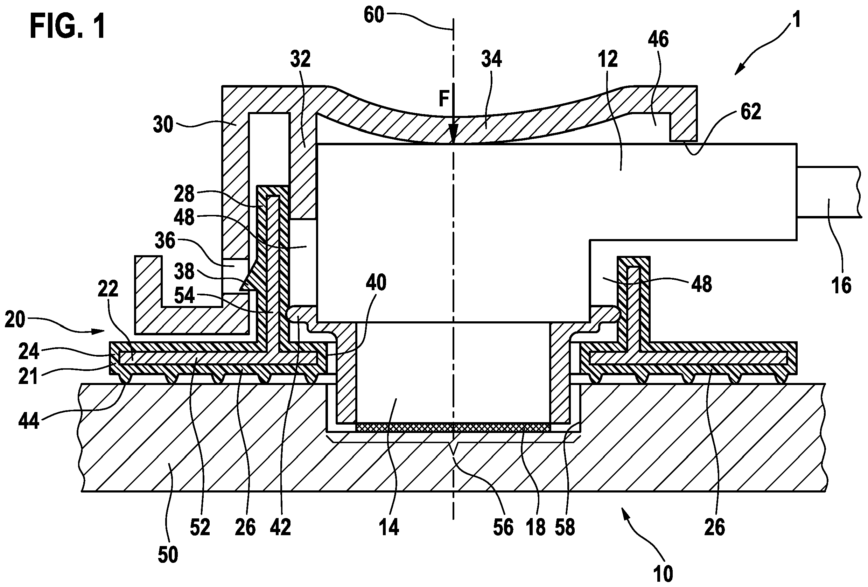

In Figur 1 ist eine Sensoranordnung 10 dargestellt, welche eine Ultraschallsensorvorrichtung 1 und ein Verkleidungsbauteil 50 für ein Fahrzeug umfasst. Bei dem Verkleidungsbauteil 50 handelt es sich beispielsweise um einen Stoßfänger eines Fahrzeugs.

Die Ultraschallsensorvorrichtung 1 umfasst einen Ultraschallsensor 12, der mit einer Halterung 20 an der Rückseite des Verkleidungsbauteils 50 befestigt werden kann. In der dargestellten Situation ist die Halterung 20 bereits stoffschlüssig mit der Rückseite des Verkleidungsbauteils 50 gefügt. Die Halterung 20 umfasst einen Träger 21 sowie eine Kappe 30, wobei die Kappe 30 mit dem Träger 21 über eine Rastverbindung lösbar befestigt ist.

Der Träger 21 ist als Hybridbauteil ausgeführt und umfasst eine Metalleinlage 22, die mit einem Kunststoff 24 umspritzt ist. Dabei umschließt der Kunststoff 24 die Metalleinlage 22 vollständig. Die Metalleinlage 22 ist beispielsweise aus Aluminium, Messing oder Edelstahl gefertigt und als Kunststoff 24 ist insbesondere glasfaserverstärktes Polypropylen-GF geeignet. Der Träger 21 umfasst einen Verbindungsabschnitt 26 und einen Rahmenabschnitt 28. Der Verbindungsabschnitt 26 ist eingerichtet, um die Halterung 20 beziehungsweise den Träger 21 stoffschlüssig mit dem Verkleidungsbauteil 50 zu fügen. Der Rahmenabschnitt 28 ist derart ausgestaltet, dass ein Aufnahmebereich 46 ausgebildet wird, in dem der Ultraschallsensor 12 aufgenommen ist. Die Metalleinlage 22 weist ebenfalls zwei Abschnitte 52, 54 auf, wobei sich die Metalleinlage 22 sowohl über den Verbindungsabschnitt 26 als auch über den Rahmenabschnitt 28 erstreckt. Dabei ist ein erster Abschnitt 52 der Metalleinlage 22 im Verbindungsabschnitt 26 angeordnet, wobei sich der erste Abschnitt 52 der Metalleinlage 22 parallel zu dem Verkleidungsbauteil 50 beziehungsweise parallel zu der mit dem Verkleidungsbauteil 50 zu fügenden Fläche erstreckt. Ein zweiter Abschnitt 54 der Metalleinlage 22 ist senkrecht zum ersten Abschnitt 52 im Rahmenbereich 28 angeordnet.

In der in Figur 1 dargestellten Ausführungsform weist der Verbindungsabschnitt 26 an der mit dem Verkleidungsbauteil 50 zu fügenden Fläche mehrere Schweißrippen 44 auf. Zumindest der Verbindungsabschnitt 26 des Trägers 21 ist rotationssymmetrisch in Bezug zu einer Achse 60 ausgeführt, so dass die Schweißrippen 44 ringförmig umlaufend in dem Verbindungsabschnitt 26 angeordnet sind. Zusätzlich zu den Schweißrippen 44 können auch Noppen angeordnet werden.

Der Verbindungsabschnitt 26 weist ferner eine Öffnung 40 auf, durch die sich ein schwingendes Element 14 des Ultraschallsensors 12 erstreckt. Das schwingende Element 14 ist in der in der Figur dargestellten Ausführungsform als eine topfförmig ausgestaltete Membran ausgeführt. Der Ultraschallsensor 12 beziehungsweise dessen schwingendes Element 14 ist an der Rückseite des Verkleidungsbauteils 50 an einem ausgedünnten Bereich 56 angeordnet. Der ausgedünnte Bereich 56 ist in Form einer Vertiefung 58 an der Rückseite des Verkleidungsbauteils 50 ausgestaltet. Zur Ankopplung des schwingenden Elements 14 an das Verkleidungsbauteil 50 im ausgedünnten Bereich 56 ist ein Kopplungselement 18 vorgesehen, welches zwischen dem schwingenden Element 14 und dem ausgedünnten Bereich 56 des Verkleidungsbauteils 50 platziert ist. Das Kopplungselement 18 ist bevorzugt als Klebeband oder Klebstoffschicht ausgebildet und derart eingerichtet, dass Schwingungen des schwingenden Elements 14 auf das Verkleidungsbauteil 50 übertragen werden. Das Kopplungselement 18 ist gegenüber der Umgebung abgedichtet über ein Dichtelement 42, welches im Bereich der Öffnung 40 in dem Träger 21 angeordnet ist. Das Kopplungselement 18 wird somit gegenüber der Umgebung durch das Verkleidungsbauteil 50, das schwingende Element 14 und das Dichtelement 42 abgedichtet. Das Dichtelement 42 ist beispielsweise als ein Elastomerbauteil ausgeführt.

Die durch den Ultraschallsensor 12 beziehungsweise dessen schwingendes Element 14 auf das Verkleidungsbauteil 50 übertragenen Schwingungen bleiben auf den gegenüber dem schwingenden Element 14 liegenden ausgedünnten Bereich 56 beschränkt, da der Träger 21, der mit dem Verkleidungsbauteil 50 verschweißt ist, eine hohe Masse und Steifigkeit aufweist. Die Steifigkeit sowie die große Masse werden dem Träger 21 durch seine Metalleinlage 22 verliehen. Dabei tragen sowohl der erste Abschnitt 52, der parallel zu der mit dem Verkleidungsbauteil 50 zu fügenden Fläche liegt, als auch der zweite Abschnitt 54, der senkrecht hierzu angeordnet ist, zu der Versteifung und der Masse des Trägers 21 bei.

Der Ultraschallsensor 12 ist zum einen wie beschrieben über das Kopplungselement 18, welches beispielsweise als Klebeband ausgeführt ist, stoffschlüssig mit dem Verkleidungsbauteil 50 verbunden. Zusätzlich wird eine kraftschlüssige Verbindung zwischen dem Ultraschallsensor 12 und dem Verkleidungsbauteil 50 über die Halterung 20 hergestellt. Dazu übt die Kappe 30 der Halterung 20 eine Vorspannkraft F in axialer Richtung, siehe Achse 60, auf den Ultraschallsensor 12 aus. Zum Erzeugen der Vorspannkraft weist die Kappe 30 eine Wölbung 34 auf, die einen elastischen Bereich der Kappe 30 darstellt. Die Kappe 30 drückt mit ihrer Wölbung 34 in axialer Richtung auf den Ultraschallsensor 12 und übt dadurch eine Vorspannkraft auf den Sensor 12 in Richtung des Kopplungselements 18 beziehungsweise in Richtung des Verkleidungsbauteils 50 aus.

Zur Herstellung einer lösbaren Rastverbindung zwischen der Kappe 30 und dem Träger 21 weist in der in Figur 1 dargestellten Ausführungsform der Träger 21 Rastnasen 38 auf, die in korrespondierende Öffnungen 36 der Kappe 30 eingreifen. Sowohl der Träger 21 als auch die Kappe 30 sind im Wesentlichen rotationssymmetrisch zu der Achse 60 ausgebildet, wobei beispielsweise drei Rastnasen 38 beziehungsweise drei korrespondierende Öffnungen 36 jeweils an dem Umfang der Kappe 30 beziehungsweise dem Rahmenabschnitt 28 des Trägers 21 verteilt angeordnet sind.

Der Ultraschallsensor 12 weist eine Anschlussleitung 16 auf, über die der Ultraschallsensor 12 angesteuert werden kann. Um die Anschlussleitung 16 herauszuführen, weist die Kappe 30 eine entsprechende Aussparung 62 auf.

Um die Sensoranordnung 10 zu montieren, wird in einem ersten Schritt der Träger 21 mit Hilfe der Schweißrippen 44 durch ein Schweißverfahren, beispielsweise Torsionsultraschallschweißen, mit dem Verkleidungsbauteil 50 gefügt. In einem zweiten Schritt wird der Ultraschallsensor 12 in die Kappe 30 eingesetzt, wobei die genaue Position des Ultraschallsensors 12 durch eine Zentrierrippe 32 festgelegt wird. Ist das Kopplungselement 18 beispielsweise als Klebeband ausgeführt, so wird anschließend eine eventuell vorhandene Schutzfolie von dem Klebeband entfernt.

In einem dritten Schritt wird die Kappe 30 zusammen mit dem Ultraschallsensor 12 auf den Träger 21 gesteckt. Dabei wird der Ultraschallsensor 12 in den Aufnahmebereich 46 eingeführt und das schwingende Element 14 des Ultraschallsensors 12 wird durch die Öffnung 40 hindurchgeführt, so dass das schwingende Element 14 beziehungsweise das auf dem schwingenden Element 14 angeordnete Kopplungselement 18, eine Klebeverbindung mit dem ausgedünnten Bereich 56 des Verkleidungsbauteils 50 eingehen kann. Die Kappe 30 wird durch die von den Rastnasen 38 und den Öffnungen 36 vermittelte Rastverbindungen auf dem Träger 21 festgehalten.

Bei dem Einsetzen des Ultraschallsensors 12 greift die Zentrierrippe 32 teilweise in den Aufnahmebereich 46 und einen radialen Freiraum 48 zwischen dem Ultraschallsensor 12 und dem Randabschnitt 28 des Trägers 21 ein.

Muss der Ultraschallsensor 12 ausgewechselt werden, beispielsweise im Fall eines Defekts des Ultraschallsensors 12, so wird in einem ersten Schritt die Kappe 30 vom Träger 21 entfernt. Der zwischen dem Ultraschallsensor 12 und dem Randabschnitt 28 des Trägers 21 vorhandene radiale Freiraum 48 erlaubt hiernach ein Ablösen des Ultraschallsensors 12 von dem als Klebeband ausgeführten Kopplungselement 18 durch Abhebeln des Ultraschallsensors 12. Dieser Freiraum 48 ist nach dem Abnehmen der Kappe 30 leicht zugänglich. Nach dem Abhebeln des Ultraschallsensors 12 können Reste des Kopplungselements 18, also Reste von Klebstoff oder von Klebeband, von dem Verkleidungsbauteil 50 beziehungsweise von dem ausgedünnten Bereich 56 entfernt werden. Die Halterung 20 ist nun bereit für das Einsetzen eines neuen Ultraschallsensors 12.

## Patentansprüche

1. Ultraschallsensorvorrichtung (1) zur Anordnung an einem Verkleidungsbauteil (50) eines Fahrzeugs umfassend einen Ultraschallsensor (12) und eine Halterung (20) mit einem Träger (21) und einer Kappe (30), wobei
der Ultraschallsensor (12) ein schwingendes Element (14) umfasst,
der Träger (21) einen Verbindungsabschnitt (26) aufweist, über den der Träger (21) mit dem Verkleidungsbauteil (50) stoffschlüssig fügbar ist, und einen Rahmenabschnitt (28) aufweist, der einen Aufnahmebereich (46) für den Ultraschallsensor (12) ausbildet, wobei in dem Verbindungsabschnitt (26) eine Öffnung (40) vorgesehen ist, durch die sich das schwingende Element (14) des Ultraschallsensors (12) erstreckt, und wobei
die Kappe (30) mittels einer Rastverbindung lösbar an dem Träger (21) befestigt ist, wobei die Kappe (30) den Aufnahmebereich (46) auf der dem Verbindungsabschnitt (26) abgewandten Seite begrenzt,
**dadurch gekennzeichnet, dass** der Träger (21) als Hybridbauteil mit einer mit Kunststoff (24) umspritzten Metalleinlage (22) ausgeführt ist, wobei sich die Metalleinlage (22) sowohl über den Verbindungsabschnitt (26) als auch den Rahmenabschnitt (28) erstreckt und wobei sich ein erster Abschnitt (52) der Metalleinlage (22) parallel zu einer Fläche erstreckt, über die der Träger (21) mit dem Verkleidungsbauteil (50) fügbar ist und ein zweiter Abschnitt (54) der Metalleinlage (22) sich senkrecht zum ersten Abschnitt (52) erstreckt, und im Aufnahmebereich (46) ein radialer Freiraum (48) zwischen dem Ultraschallsensor (12) und dem Rahmenabschnitt (28) des Trägers (21) ausgebildet ist und die Kappe (30) eine Zentrierrippe (32) aufweist, die zumindest teilweise in den Freiraum (48) eingreift.

2. Ultraschallsensorvorrichtung (1) nach Anspruch 1, **dadurch gekennzeichnet, dass** ein Dichtelement (42) zwischen dem schwingenden Element (14) und dem Träger (21) im Bereich der Öffnung (40) im Verbindungsabschnitt (26) angeordnet ist.

3. Ultraschallsensorvorrichtung (1) nach einem der Ansprüche 1 oder 2, **dadurch gekennzeichnet, dass** die Kappe (30) eingerichtet ist, den Ultraschallsensor (12) in eine Richtung eines Kopplungselements (18) vorzuspannen.

4. Ultraschallsensorvorrichtung (1) nach einem der Ansprüche 1 bis 3, **dadurch gekennzeichnet, dass** der Verbindungsabschnitt (26) auf der Seite, die mit dem Verkleidungsbauteil (50) fügbar ist, zumindest eine Schweißrippe (44) und/oder Noppen aufweist.

5. Ultraschallsensorvorrichtung (1) nach einem der Ansprüche 1 bis 4, **dadurch gekennzeichnet, dass** an der nach außen weisenden Seite des schwingenden Elements (14) ein Kopplungselement (18) angeordnet ist.

6. Ultraschallsensorvorrichtung (1) nach einem der Ansprüche 1 bis 5, **dadurch gekennzeichnet, dass** für die lösbare Befestigung der Kappe (30) am Träger (21) Rastnasen (38) an einer Außenseite des Rahmenabschnitts (28) des Trägers (21) vorgesehen sind, die in korrespondierende Öffnungen (36) an der Kappe (30) eingreifen.

7. Sensoranordnung (10) umfassend mindestens eine Ultraschallsensorvorrichtung (1) gemäß einem der Ansprüche 1 bis 6 und ein Verkleidungsbauteil (50) für ein Fahrzeug, **dadurch gekennzeichnet, dass** die Ultraschallsensorvorrichtung (1) über den Verbindungsabschnitt (26) des Trägers (21) stoffschlüssig mit der Rückseite des Verkleidungsbauteils (50) gefügt ist.

8. Sensoranordnung (10) gemäß Anspruch 7, **dadurch gekennzeichnet, dass** das schwingende Element (14) des Ultraschallsensors (12) mittels eines Kopplungselements (18) mit dem Verkleidungsbauteil (50) verbunden ist, wobei das Kopplungselement (18) mittels des Verkleidungsbauteils (50), dem schwingenden Element (14) und eines Dichtelements (42) gegenüber der Umgebung abgedichtet ist, so dass keine Feuchtigkeit eindringen kann.

9. Fahrzeug mit einer Sensoranordnung (10) nach Anspruch 7 oder 8.

## Claims

1. Ultrasonic sensor device (1) for arrangement on a fairing component (50) of a vehicle, comprising an ultrasonic sensor (12) and a mount (20) with a carrier (21) and a cap (30), wherein
the ultrasonic sensor (12) comprises an oscillating element (14),
the carrier (21) has a connecting section (26) by means of which the carrier (21) can be connected in a materially joined fashion to the fairing component (50), and has a frame section (28) which forms a receptacle region (46) for the ultrasonic sensor (12), wherein an opening (40), through which the oscillating element (14) of the ultrasonic sensor (12) extends, is provided in the connecting section (26), and where
the cap (30) is detachably fastened to the carrier (21) by means of a latching connection, wherein the cap (30) bounds the receptacle region (46) on the side facing away from the connecting section (26),
**characterized in that** the carrier (21) is embodied as a hybrid component with a metal inlay (22) which is encapsulated by injection moulding with plastic (24), wherein the metal inlay (22) extends both over the connecting section (26) and over the frame section (28), and wherein a first section (52) of the metal inlay (22) extends parallel to a surface by means of which the carrier (21) can be joined to the fairing component (50), and a second section (54) of the metal inlay (22) extends perpendicular with respect to the first section (52), and a radial free space (48) is formed between the ultrasonic sensor (12) and the frame section (28) of the carrier (21) in the receptacle region (46), and the cap (30) has a centring rib (32) which engages at least partially in the free space (48).

2. Ultrasonic sensor device (1) according to Claim 1, **characterized in that** a sealing element (42) is arranged between the oscillating element (14) and the carrier (21) in the region of the opening (40) in the connecting section (26).

3. Ultrasonic sensor device (1) according to one of Claims 1 and 2, **characterized in that** the cap (30) is configured to prestress the ultrasonic sensor (12) in a direction of a coupling element (18).

4. Ultrasonic sensor device (1) according to one of Claims 1 to 3, **characterized in that** the connecting section (26) has at least one welding rib (44) and/or knobs on the sides which can be connected to the fairing component (50).

5. Ultrasonic sensor device (1) according to one of Claims 1 to 4, **characterized in that** a coupling element (18) is arranged on the outwardly pointing side of the oscillating element (14).

6. Ultrasonic sensor device (1) according to one of Claims 1 to 5, **characterized in that**, for the detachable fastening of the cap (30) on the carrier (21), latching projections (38) are provided on an outer side of the frame section (28) of the carrier (21), which latching projections (38) engage in corresponding openings (36) on the cap (30).

7. Sensor arrangement (10) comprising at least one ultrasonic sensor device (1) according to one of Claims 1 to 6, and a fairing component (50) for a vehicle, **characterized in that** the ultrasonic sensor device (1) is connected in a materially joined fashion to the rear side of the fairing component (50) by means of the connecting section (26) of the carrier (21).

8. Sensor arrangement (10) according to Claim 7, **characterized in that** the oscillating element (14) of the ultrasonic sensor (12) is connected to the fairing component (50) by means of a coupling element (18), wherein the coupling element (18) is sealed with respect to the surroundings by means of the fairing component (50), the oscillating element (14) and a sealing element (42), so that no moisture can penetrate.

9. Vehicle having a sensor arrangement (10) according to Claim 7 or 8.

## Revendications

1. Dispositif de détection à ultrasons (1) destiné à être agencé sur un élément d'habillage (50) d'un véhicule, comprenant un capteur à ultrasons (12) et un dispositif de retenue (20) muni d'un support (21) et d'un couvercle (30), dans lequel
le capteur à ultrasons (12) comprend un élément oscillant (14),
le support (21) comporte une section de raccordement (26) par laquelle le support (21) peut être assemblé par complémentarité de matière avec l'élément d'habillage (50), et comporte une section d'encadrement (28) qui forme une zone de logement (46) pour le capteur à ultrasons (12), dans lequel il est prévu dans la section de raccordement (26) une ouverture (40) à travers laquelle passe l'élément oscillant (14) du capteur à ultrasons (12), et dans lequel
le couvercle (30) est fixé de manière amovible au support (21) au moyen d'un assemblage par encliquetage, dans lequel le couvercle (30) délimite la zone de logement (46) sur la face opposée à la section de raccordement (26),
**caractérisé en ce que** le support (21) est réalisé sous la forme d'un composant hybride comportant un insert métallique (22) enrobé de matière plastique (24), dans lequel l'insert métallique (22) s'étend à la fois sur la section de raccordement (26) et sur la section d'encadrement (28) et dans lequel une première section (52) de l'insert métallique (22) s'étend parallèlement à une surface sur laquelle le support (21) peut être relié à l'élément d'habillage (50) et une deuxième section (54) de l'insert métallique (22) s'étend perpendiculairement à la première section (52), et un espace libre radial (48) est formé dans la zone de logement (46) entre le capteur à ultrasons (12) et la section d'encadrement (28) du support (21), et le couvercle (30) présente une nervure de centrage (32) qui s'engage au moins partiellement dans l'espace libre (48).

2. Dispositif de détection à ultrasons (1) selon la revendication 1, **caractérisé en ce qu'**un élément d'étanchéité (42) est disposé entre l'élément oscillant (14) et le support (21) dans la zone de l'ouverture (40) ménagée dans la section de raccordement (26).

3. Dispositif de détection à ultrasons (1) selon l'une des revendications 1 ou 2, **caractérisé en ce que** le couvercle (30) est conçu pour précontraindre le capteur à ultrasons (12) dans une direction d'un élément d'accouplement (18).

4. Dispositif de détection à ultrasons (1) selon l'une des revendications 1 à 3, **caractérisé en ce que** la section de raccordement (26) comporte au moins une nervure de soudage (44) et/ou des bavures sur la face qui peut être reliée à l'élément d'habillage (50).

5. Dispositif de détection à ultrasons (1) selon l'une des revendications 1 à 4, **caractérisé en ce qu'**un élément d'accouplement (18) est disposé sur la face qui est orientée vers l'extérieur de l'élément oscillant (14).

6. Dispositif de détection à ultrasons (1) selon l'une des revendications 1 à 5, **caractérisé en ce que**, pour la fixation amovible du couvercle (30) au support (21), il est prévu, sur une face extérieure de la section d'encadrement (28) du support (21), des pattes d'encliquetage (38) qui s'engagent dans des ouvertures (36) correspondantes sur le couvercle (30).

7. Agencement de détection (10) comprenant au moins un dispositif de détection à ultrasons (1) selon l'une des revendications 1 à 6 et un élément d'habillage (50) pour véhicule, **caractérisé en ce que** le dispositif de détection à ultrasons (1) est relié par complémentarité de matière à la face arrière de l'élément d'habillage (50) par l'intermédiaire de la section de raccordement (26) du support (21).

8. Agencement de détection (10) selon la revendication 7, **caractérisé en ce que** l'élément oscillant (14) du capteur à ultrasons (12) est relié à l'élément d'habillage (50) au moyen d'un élément d'accouplement (18), dans lequel l'élément d'accouplement (18) est rendu étanche par rapport à l'environnement au moyen de l'élément d'habillage (50), de l'élément oscillant (14) et d'un élément d'étanchéité (42), de telle sorte qu'aucune humidité ne puisse pénétrer.

9. Véhicule comportant un agencement de détection (10) selon la revendication 7 ou 8.
